# EUROPEAN PATENT APPLICATION

(11) **EP 2 884 399 A2**
(43) Date of publication of application: **17.06.2015**
(21) Application number: 14183663.5
(22) Date of filing: 05.09.2014
(51) Int. Cl.: G06F 13/40

(54) **Communications method, device and system**

(30) Priority: 13.12.2013 US 201361915769 P; 20.08.2014 US 201414464013
(71) Applicant: MediaTek, Inc, Hsin-Chu 300 (TW)
(72) Inventor: Chiang, Tsung-Yueh, Fengyuan Dist., Taichung City 420 (TW); Lin, Szu-Wei, Neihu Dist., Taipei City 114 (TW)
(74) Representative: 2K Patentanwälte Blasberg Kewitz & Reichel

(57) **Abstract**

A communications system, device and method are provided. The communication device includes a communication unit, configured to establish a link with a second communication device by a touch-link technology; a sensing unit, configured to generate a sensing result by sensing the communication device; and a processing unit, configured to determine a role for the communication device according to the sensing result.

## Description

### BACKGROUND OF THE INVENTION

### CROSS REFERENCE TO RELATED APPLICATIONS

This Application claims priority of U.S. Provisional Patent Application No. 61/915,769, filed on Dec. 13, 2013, the entirety of which is incorporated by reference herein.

### BACKGROUND OF THE INVENTION

### Field of the Invention

The invention generally relates to a communications method and devices, and more particularly, to a method to determine a role of the communication device according to the sensing result.

### Description of the Related Art

Near Field Communication (NFC) is set of standards for a non-touching identification and connection technology. It uses the near field of the magnetic-field communication method in a mobile apparatus, consumer electronics products, personal computer or smart electrical device to process short distance wireless communication, which allows users to directly exchange information, content and services.

Because the market for the handheld devices such as cell phones has been fully developed, handheld devices may support the moving-paying or be regarded as the point of sale (POS) system. However, the NFC used to transmit and receive signals is through the magnetic-field communication method, therefore the sensing card readers or elements with a similar function need to be configured on cell phone or other the handheld device. This increases the size of the handheld device and limits the configuration and the material of the elements in the handheld device.

Therefore, a touch-link technology of the touch-panel devices, such as that shown in patents US 2011/0304583, US 2013/0147760 and CN 102916729A, has been developed. The touch-link technology can use the panel and driver IC of the touch-panel device to process communication. The touch-panel device comprises a touch sensor. At least part of the touch sensor is comprised in part of the touch panel of the touch-panel device. The touch panel may not have a display function, such as a touch pad. Conversely, the touch panel may have a display function, such as a touch screen. The touch sensor comprises a plurality of driving electrodes and sensing electrodes which are configured on the base plate to compose the capacitive structure. At least one of the driving electrodes and sensing electrodes is regarded as a transmitting electrode, and at least of one of the driving electrodes and sensing electrodes is regarded as a receiving electrode. Therefore, the signals can be transmitted and received by the original electrodes and driver IC of the touch panel to complete the touch link based on the electrodes without configuring other sensing card readers or elements with a similar function. Therefore, compared with NFC technology, the size and cost of the handheld device may be reduced.

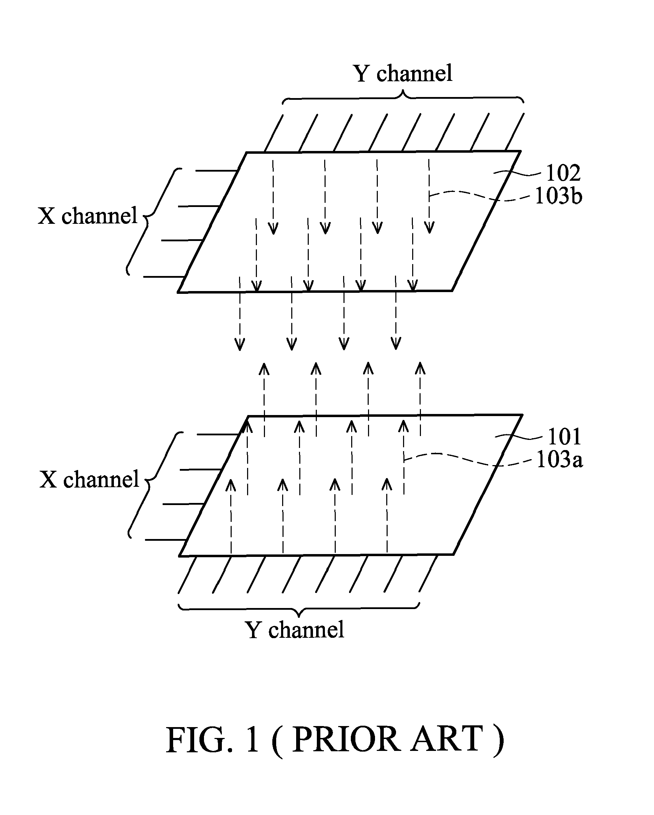

Fig. 1 is a schematic diagram of the touch link between the first touch-panel device and the second touch-panel device according to the prior art. As shown in Fig. 1, there are near electrical fields 103a and 103b between the first touch-panel device 101 and the second touch-panel device 102. Note that both the first touch-panel device 101 and the second touch-panel device 102 have the function of transmitting and receiving signals. In the touch link technology, when the first touch-panel device 101 transmits the signal to the second touch-panel device 102, the direction of the electrical field is directed to the second touch-panel device 102 (such as the near electrical field 103a in the Fig. 1). When the second touch-panel device 102 transmits the signal to the first touch-panel device 101, the direction of the electrical field is directed to the first touch-panel device 101 (such as the near electrical field 103b in Fig. 1). The X channel and Y channel are respectively viewed as the transmitting electrode and the receiving electrode, which are configured on the base plate to compose the capacitive structure.

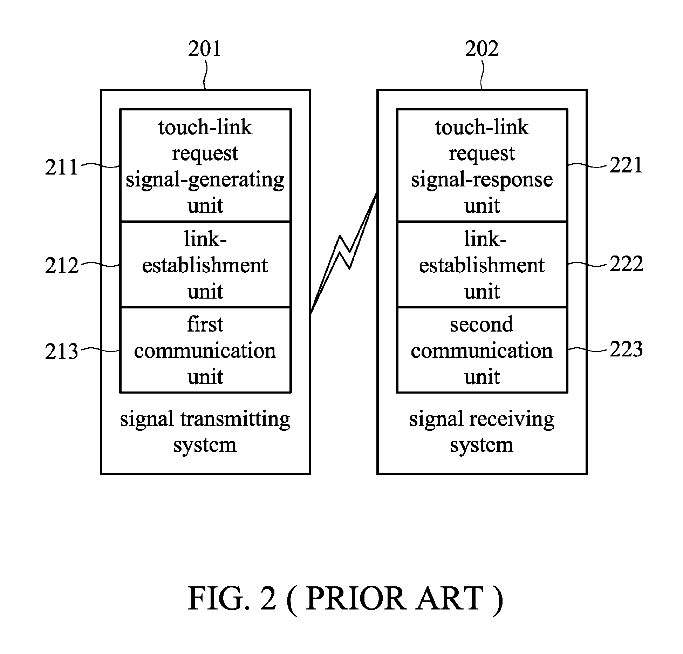

Fig. 2 is a block diagram of the touch link system between the first touch-panel device and the second touch-panel device according to the prior art. The first touch-panel device 101 comprises a signal transmitting system 201 shown in Fig. 2, and the second touch-panel device 102 comprises a signal receiving system 202 shown in Fig. 2. The signal transmitting system 201 comprises a touch-link request signal-generating unit 211, a link-establishment unit 212 and a first communication unit 213. The touch-link request signal-generating unit 211 is configured to generate the request signal of the touch-link and transmit the request signal to the second touch-panel device 102 by the transmitting electrode. The link-establishment unit 212 establishes the link with the second touch-panel device 102 after the link-establishment unit 212 receives the response signal of the second touch-panel device 102 form the receiving electrode. When the link is established, the first communication unit 213 transmits the communication information or data to the second touch-panel device 102 by the transmitting electrode.

The signal transmitting system 202 comprises a touch-link request signal response unit 221, a link-establishment unit 222 and a second communication unit 223. The touch-link request signal response unit 221 responds with a response signal to the first touch-panel device 101 by the transmitting electrode, after the touch-link request signal response unit 221 receives the request signal from the first touch-panel device 101 by the receiving electrode. The link-establishment unit 222 establishes the link with the first touch-panel device 101, after the touch-link request signal response unit 221 responds with a response signal to the first touch-panel device 101. When the link is established, the second communication unit 223 receives the communication information or data from the first touch-panel device 102 by the receiving electrode.

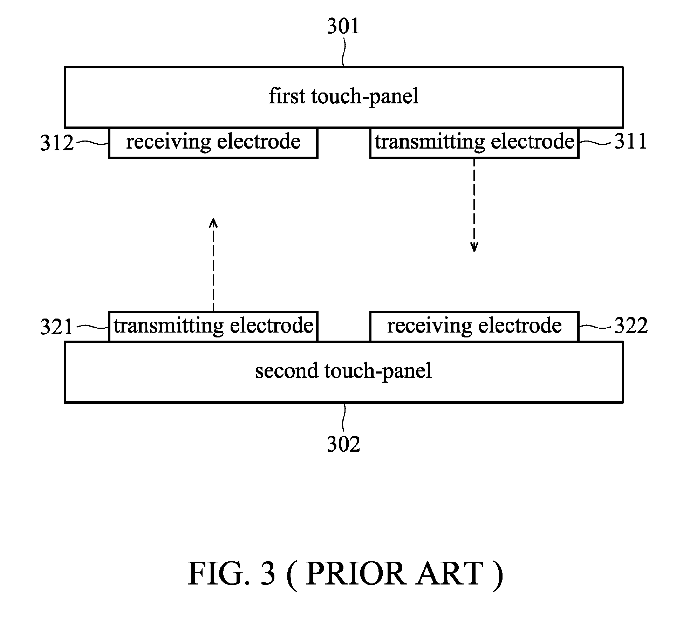

Fig. 3 is a schematic diagram of the first touch-panel 301 and the second touch-panel 302 according to the prior art. As shown in Fig. 3, the first touch-panel 301 and the second touch-panel 302 comprise a touch sensor (not presented), wherein the touch sensor comprises transmitting electrodes 311, 321 and receiving electrodes 312, 322 which are configured on the base plate to compose the capacitive structure to transmit and receive signals.

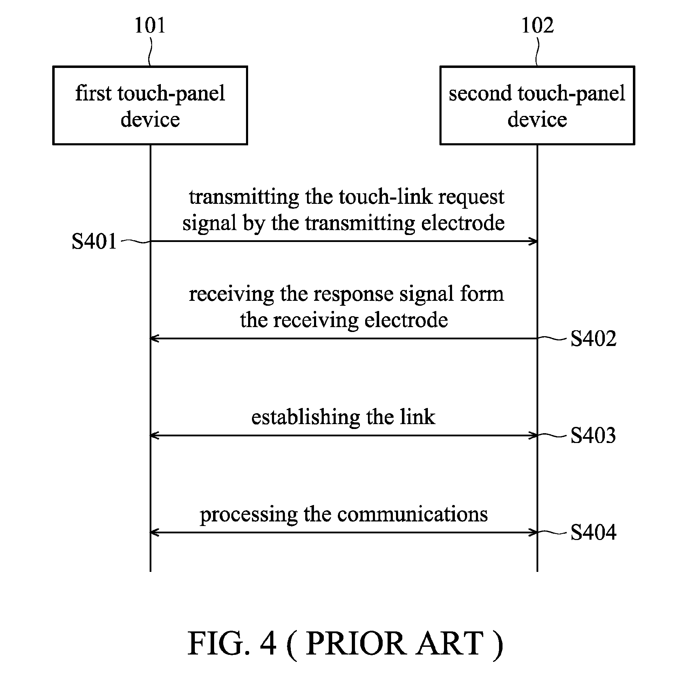

Fig. 4 is a flow chart illustrating the touch link method according to the prior art. Firstly, in step S401, the touch-link request signal-generating unit 211 generates a touch-link request signal and transmits the touch-link request signal to the second touch-panel device 102 by the transmitting electrode. Then, after the link-establishment unit 212 receives the response signal of the second touch-panel device 102 form the receiving electrode (step S402), the link-establishment unit 212 establishes the link with the second touch-panel device 102 (step S403). Lastly, in step S404, the first communication unit 213 transmits the communication information or data to the second touch-panel device 102 by the transmitting electrode.

With the growing of touch-link technology on the market, it is necessary to pay more attention to provide a better user experience. However, devices that employ touch-link technology may play different roles in each transmission pair, e.g. sender and receiver, client and master, etc. User input is necessary to decide the role of each device by choosing the role from a menu displayed on both devices before a touch-link is established. Namely, the user needs to decide which device is the sender and which is the receiver before a touch-link is established. Therefore, how to simplify user operation is worthy of discussion.

### BRIEF SUMMARY OF THE INVENTION

A communications method and apparatus are provided to overcome the above mentioned problems.

An embodiment of the invention provides a communication device. The communication device comprises a communication unit, configured to establish a link with a second communication device by a touch-link technology; a sensing unit, configured to generate a sensing result by sensing the communication device; and a processing unit, configured to determine a which role for the communication device according to the sensing result.

An embodiment of the invention provides a communications system. The communication system comprises a first communication device and a second communication device, which establishes a link with the first communication device by a touch-link technology, wherein the roles of the first communication device and the second communication device are determined according to the sensing results generated by the first communication device and the second communication device.

An embodiment of the invention provides a communication method, which is applied to a communication device. The steps of the method comprise establishing, by the communication device, a link by a touch-link technology; sensing the communication device for generating a sensing result; and determining a role of the communication device according to the sensing result.

Other aspects and features of the invention will become apparent to those with ordinary skill in the art upon review of the following descriptions of specific embodiments of communication transmission methods and systems.

### BRIEF DESCRIPTION OF THE DRAWINGS

The invention will become more fully understood by referring to the following detailed description with reference to the accompanying drawings, wherein:
Fig. 1 is a schematic diagram of the touch link between the first touch-panel device and the second touch-panel device according to the prior art;
Fig. 2 is a block diagram of the touch link system between the first touch-panel device and the second touch-panel device according to the prior art;
Fig. 3 is a schematic diagram of the first touch-panel 301 and the second touch-panel 302 according to the prior art;
Fig. 4 is a flow chart illustrating the touch link method according to the prior art;
Fig. 5 is a block diagram of a communication device 100 according to an embodiment of the invention;
Fig. 6 is a flow chart illustrating the communications method according to an embodiment of the invention;
Fig. 7 is a flow chart illustrating the communications method according to another embodiment of the invention;
Fig. 8 is a flow chart illustrating the communications method according to another embodiment of the invention;
Fig. 9 is a flow chart illustrating the communications method according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

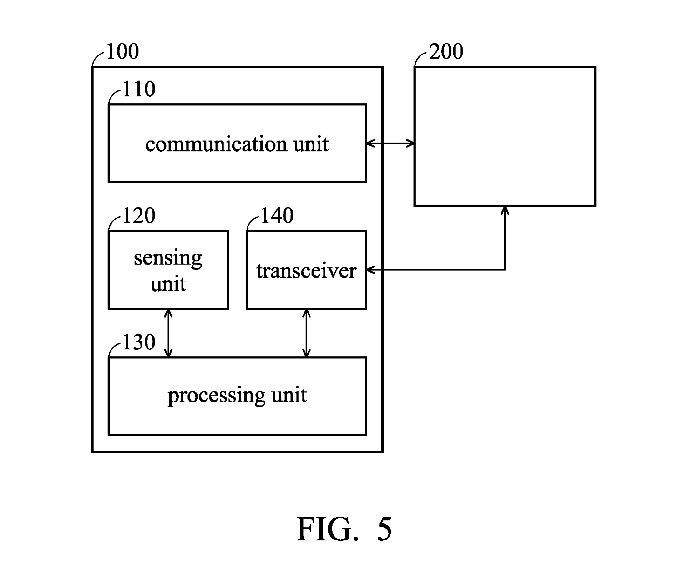

Fig. 5 is a block diagram of a communication device 100 according to an embodiment of the invention. The communication device 100 comprises a communication unit 110, a sensing unit 120, a processing unit 130, and a transceiver 140. The communication device 100 may be a smartphone, a tablet, a notebook, a personal digital assistant (PDA) or another device which has a touch-link function. In an embodiment of the invention, as shown in Fig. 5, a second communication device 200 also may be a smartphone, a tablet, a note book, a personal digital assistant (PDA) or other devices which have a touch link function, and the second communication device 200 may comprise similar elements and process similar functions as the communication device 100. Note that, in order to clarify the concept of the invention, Fig. 5 presents a simplified block diagram in which only the elements relevant to the invention are shown. However, the invention should not be limited to what is shown in Fig. 5.

In an embodiment of the invention, communication unit 110 is configured to establish a link with the second communication device 200 by a touch-link technology. When the touch link function of the communication device 100 and the second communication device 200 are enabled, the communication device 100 can establish a link with the second communication device 200 by the communication unit 110. In an embodiment of the invention, the touch-link technology is a HotKnot technology as shown in Figs. 1-4.

The sensing unit 120 may comprises a plurality of sensors, such as a gyroscope sensor (G-sensor), and an accelerometer. The sensing unit 120 can sense the motion and direction of the communication device 100 to generate a sensing result. In some embodiments, the sensing unit 120 can sense the motion of the communication device 100 on six axes to calculate the moving velocity of the communication device 100. In some embodiments, the sensing unit 120 can sense the direction of the communication device 100 to determine whether the panel of the communication device 100 is up or down. Note that, in the embodiments of the invention, the sensing unit 120 only sense the motion and direction of the communication device 100, but the invention should not be limited to what is shown in these embodiments. The sensing unit 120 may sense other parameters to generate the sensing result.

The processing unit 130 may control the operations of the baseband signal processing and the RF signal processing. According to an embodiment of the invention, the processing unit 130 may also be arranged to execute the program codes of the software module(s) of the corresponding baseband signal processing and/or the RF signal processing. The program codes accompanied with specific data in a data structure may also be referred to as a processor logic unit or a stack instance when being executed. Therefore, the processing unit 130 may be regarded as being comprised of a plurality of processor logic units, each for executing one or more specific functions or tasks of the corresponding software module(s). In an embodiment of the invention, the processing unit 130 may determine the role of the communication device 100 according to the sensing result generated by the sensing unit 120.

The transceiver 140 may comprise a plurality of antennas to transmit data to the second communication device 200 and receive data from the second communication device 200. In an embodiment of the invention, the communication device 100 further comprises a memory unit (not presented). The memory unit may store the software and firmware program codes, system data, user data, etc. of the communication device 100. The memory unit may be a volatile memory, e.g. a Random Access Memory (RAM), or a nonvolatile memory, e.g. a flash memory, Read-Only Memory (ROM), or hard disk, or any combination thereof.

In an embodiment of the invention, when the communication unit 110 is establishing a link with the second communication device 200, the sensing unit 120 is configured to generate a sensing result by sensing the communication device 100, wherein the sensing unit 120 generates the sensing result by sensing a motion parameter or a direction parameter of the communication device 100. Then, the processing unit 130 may determine a role of the communication device 100 according to the sensing result. Then, the transceiver 140 may transmit data to the second communication device 200 or receive data from the second communication device 200 according to the role of the communication device 100.

In some embodiments of the invention, the processing unit 130 may determine a role of the communication device 100 according to a first threshold. The first threshold is configured to determine the communication device 100 is moving or motionless, or the moving velocity of the communication device 100 is faster or slower than the second communication device 200. The motion parameter of the communication device 100 is configured to be compared to the first threshold by the processing unit 130, and the processing unit 130 may determine the role of the communication device 100 is a sender or a receiver according to the comparison result. More detail descriptions are described as follow.

In an embodiment of the invention, if the motion parameter of the communication device 100 is greater than a first threshold, the processing unit 130 may determine that the role of the communication device 100 is sender. On the other hand, if the role of the communication device 100 is a sender, the role of the second communication device 200 may be regarded as receiver. If the motion parameter of the communication device 100 is smaller than the first threshold, the processing unit 130 determines the role of the communication device 100 is a receiver. In this situation, if the role of the communication device 100 is a receiver, the role of the second communication device 200 may be regarded as a sender.

In another embodiment of the invention, if the motion parameter of the communication device 100 is greater than a first threshold, the processing unit 130 may determine that the role of the communication device 100 is a receiver. On the other hand, if the role of the communication device 100 is a receiver, the role of the second communication device 200 may be regarded as a sender. If the motion parameter of the communication device 100 is smaller than the first threshold, the processing unit 130 determines the role of the communication device 100 is a sender. In this situation, if the role of the communication device 100 is a sender, the role of the second communication device 200 may be regarded as a receiver.

In some embodiments of the invention, the processing unit 130 may determine a role of the communication device 100 according to a second threshold. The second threshold is configured to determine the direction of panel of the communication device 100 is up or down. In an embodiment of the invention, if the direction parameter of the communication device 100 is greater than a second threshold, it means that the orientation of panel of the communication device 100 is up, and if the direction parameter of the communication device 100 is smaller than a second threshold, it means that the direction of panel of the communication device 100 is down. In another embodiment of the invention, if the direction parameter of the communication device 100 is greater than a second threshold, it means that the direction of panel of the communication device 100 is down, and if the direction parameter of the communication device 100 is smaller than a second threshold, it means that the orientation of panel of the communication device 100 is up. The direction parameter of the communication device 100 is configured to be compared to the second threshold by the processing unit 130, and the processing unit 130 may determine the role of the communication device 100 is a sender or a receiver according to the comparison result. More detail descriptions are described as follow.

In an embodiment of the invention, if the direction parameter of the communication device 100 is greater than a second threshold, the processing unit 130 determines the role of the communication device 100 is a sender. On the other hand, if the role of the communication device 100 is a sender, the role of the second communication device 200 may be regarded as a receiver. If the direction parameter of the communication device 100 is smaller than a second threshold, the processing unit 130 determines the role of the communication device 100 is a receiver. In this situation, if the role of the communication device 100 is a receiver, the role of the second communication device 200 may be regarded as a sender.

In another embodiment of the invention, if the direction parameter of the communication device 100 is greater than a second threshold, the processing unit 130 determines the role of the communication device 100 is a receiver. On the other hand, if the role of the communication device 100 is a receiver, the role of the second communication device 200 may be regarded as a sender. If the direction parameter of the communication device 100 is smaller than a second threshold, the processing unit 130 determines the role of the communication device 100 is a sender. In this situation, if the role of the communication device 100 is a sender, the role of the second communication device 200 may be regarded as a receiver.

Note that, the first threshold and second threshold are pre-defined. In addition, the rule regarding the role assignment is also pre-defined. For example, if the motion parameter of the communication device 100 is greater than a first threshold, the communication device 100 may be regarded as a sender or a receiver, and if the direction parameter of the communication device 100 is greater than a second threshold, the communication device 100 may be regarded as a sender or a receiver.

In an embodiment of the invention, the processing unit 130 may adopt the first threshold or the second threshold to determine the role of the communication device 100 according to different situations. For example, if the panel of communication device 100 is up and the panel of the second communication device 200 is down, the processing unit 130 may adopt the first threshold to determine the role of the communication device 100. If the communication device 100 is moving and the second communication device 200 is motionless, the processing unit 130 may adopt the second threshold to determine the role of the communication device 100. In an embodiment of the invention, the sensing result is generated according to a plurality of parameters, such as the motion parameter, direction parameter and so on, wherein the parameters have different weightings. The weighting of the parameter is increased according to the threshold adopted by processing unit 130. For example, if the processing unit 130 adopts the first threshold, the weight of the motion parameter will be increased.

In an embodiment of the invention, if the link is established successfully and the roles of the communication device 100 and the second communication device 200 are determined, the sensing unit 120 will sense communication device 100 continuously and the processing unit 130 determine whether need to adjust the role of the communication device 100 according to the sensing result. If the link fails to be established or the role of the communication device 100 can't be determined, the sensing unit 120 will sense the communication device 100 again. In an embodiment of the invention, the role of the communication device 100 can't be determined, because the directions of the communication device 100 and the second communication device 200 are the same, or the moving velocity of the communication device 100 and the second communication device 200 are the same.

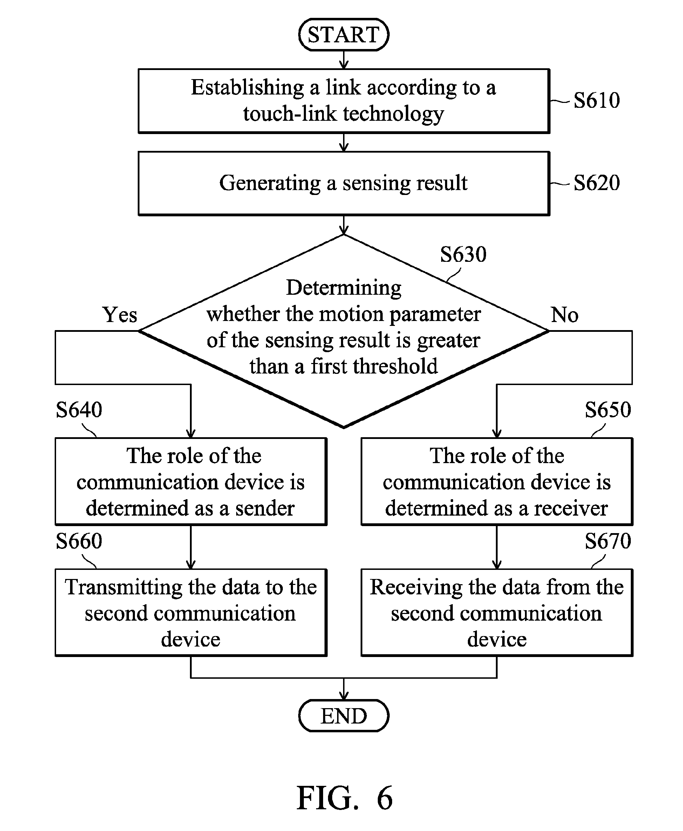

Fig. 6 is a flow chart illustrating the communications method according to an embodiment of the invention. The communications method is applied to the communication device 100. In step S610, a link with the second communication device 200 is established by the communication device 100 according to a touch-link technology. In step S620, the communication device 100 is sensed to generate a sensing result. In step S630, the motion parameter from the sensing result of the communication device 100 is determined whether the value of the motion parameter is greater than a first threshold. If the motion parameter of the communication device is greater than a first threshold, the role of the communication device is determined as a sender (S640). If the motion parameter of the communication device is smaller than a first threshold, the role of the communication device is determined as a receiver (S650). In step S660, if the role of the communication device 100 is sender, the data is transmitted to the second communication device 200. In step S670, if the role of the communication device 100 is receiver, the data is received from the second communication device 200.

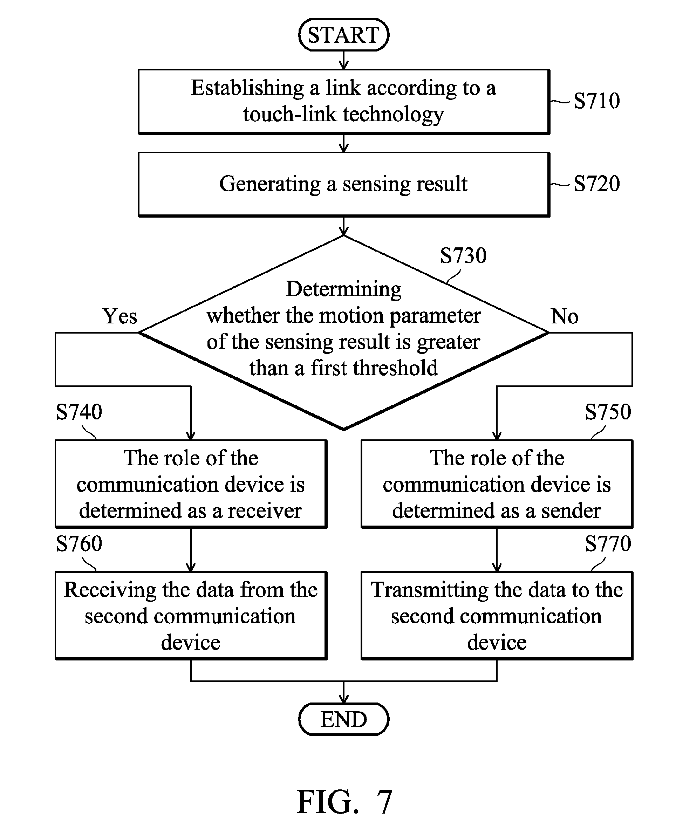

Fig. 7 is another flow chart illustrating the communications method according to an embodiment of the invention. The communications method is applied to the communication device 100. The communications method is applied to the communication device 100. In step S710, a link with the second communication device 200 is established by the communication device 100 according to a touch-link technology. In step S720, the communication device 100 is sensed to generate a sensing result. In step S730, the motion parameter from the sensing result of the communication device 100 is determined whether the value of the motion parameter is greater than a first threshold. If the motion parameter of the communication device is greater than a first threshold, the role of the communication device is determined as a receiver (S740). If the motion parameter of the communication device is smaller than a first threshold, the role of the communication device is determined as a sensor (S750). In step S760, if the role of the communication device 100 is receiver, the data is received from the second communication device 200. In step S770, if the role of the communication device 100 is sender, the data is transmitted to the second communication device 200.

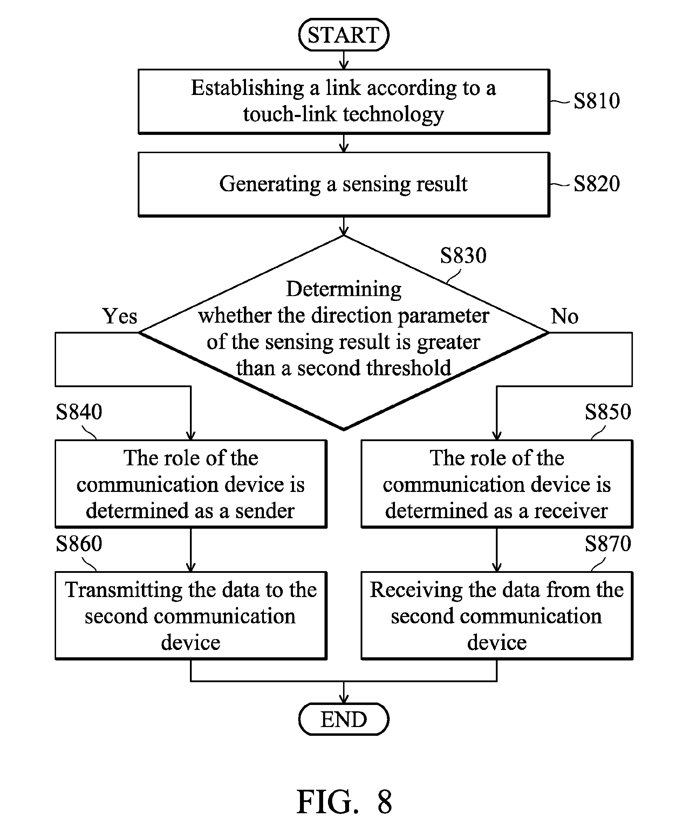

Fig. 8 is another flow chart illustrating the communications method according to an embodiment of the invention. The communications method is applied to the communication device 100. In step S810, a link with the second communication device 200 is established by the communication device 100 according to a touch-link technology. In step S820, the communication device 100 is sensed to generate a sensing result. In step S830, the direction parameter from the sensing result of the communication device 100 is determined whether the value of the direction parameter is greater than a second threshold. If the direction parameter of the communication device is greater than a second threshold, the role of the communication device is determined as a sender (S840). If the direction parameter of the communication device is smaller than the second threshold, the role of the communication device is determined as a receiver (S850). In step S860, if the role of the communication device 100 is sender, the data is transmitted to the second communication device 200. In step S870, if the role of the communication device 100 is receiver, the data is received from the second communication device 200.

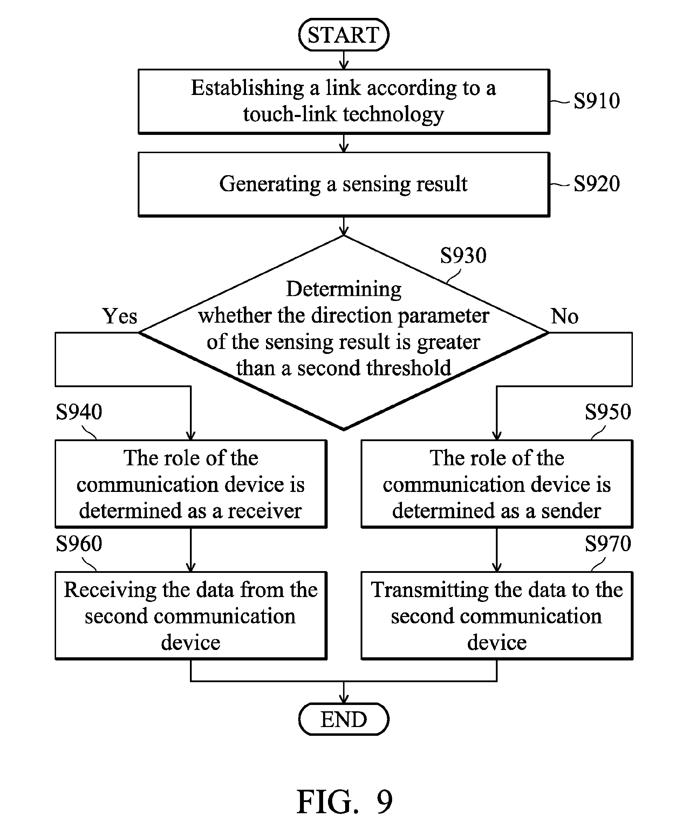

Fig. 9 is another flow chart illustrating the communications method according to an embodiment of the invention. The communications method is applied to the communication device 100. The communications method is applied to the communication device 100. In step S910, a link with the second communication device 200 is established by the communication device 100 according to a touch-link technology. In step S920, the communication device 100 is sensed to generate a sensing result. In step S930, the direction parameter from the sensing result of the communication device 100 is determined whether the value of the direction parameter is greater than a second threshold. If the direction parameter of the communication device is greater than a second threshold, the role of the communication device is determined as a receiver (S940). If the direction parameter of the communication device is smaller than a second threshold, the role of the communication device is determined as a sensor (S950). In step S960, if the role of the communication device 100 is receiver, the data is received from the second communication device 200. In step S970, if the role of the communication device 100 is sender, the data is transmitted to the second communication device 200.

In some embodiments of the invention, the communications methods further comprise the step of continuously sensing the communication device 100, if the link is established successfully. In some embodiments of the invention, the communications methods further comprise the step of sensing the communication device 100 again if the link fails to be established or the role of the communication device 100 can't be determined. In some embodiments of the invention, the communications methods further comprise the step of adjusting the role of the communication device 100 according to the changed sensing result, if the motion parameter or the direction parameter of the communication device 100 is changed.

Therefore, the communication method of the invention provides an intelligent and intuitive decision by referring to relative sensing parameters of the communication device. The user does not need to manually decide which communication device is sender and which communication device is receiver before touch-link is established. The communication device can directly and automatically determine its role.

The steps of the method described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such that the processor can read information (e.g., code) from and write information to the storage medium. A sample storage medium may be integral to the processor. The processor and the storage medium may reside in an ASIC. The ASIC may reside in user equipment. Alternatively, the processor and the storage medium may reside as discrete components in user equipment. Moreover, in some aspects any suitable computer-program may comprise a computer-readable medium comprising codes relating to one or more of the aspects of the disclosure. In some aspects a computer program may comprise packaging materials.

The above paragraphs describe many aspects. Obviously, the teaching of the invention can be accomplished by many methods, and any specific configurations or functions in the disclosed embodiments only present a representative condition. Those who are skilled in this technology can understand that all of the disclosed aspects of the invention can be applied independently or be incorporated.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A communication device (100), comprising:
a communication unit (110), configured to establish a link with a second communication device by a touch-link technology;
a sensing unit (120), configured to generate a sensing result by sensing the communication device; and
a processing unit (130), configured to determine a role for the communication device according to the sensing result.

2. The communication device of claim 1, wherein the sensing unit generates the sensing result by sensing a motion parameter or a direction parameter of the communication device.

3. The communication device of claim 2, wherein the motion parameter of the communication device is compared to a first threshold, the processing unit determines the role of the communication device is a sender according to a comparison result.

4. The communication device of claim 2 or 3, wherein the motion parameter of the communication device is compared to a first threshold, the processing unit determines the role of the communication device is a receiver according to a comparison result.

5. The communication device of any of the claims 2 to 4, wherein the direction parameter of the communication device is compared to a second threshold, the processing unit determines the role of the communication device is a sender according to a comparison result.

6. The communication device of any of the claims 2 to 5, wherein the direction parameter of the communication device is compared to the second threshold, the processing unit determines the role of the communication device is a receiver according to a comparison result.

7. The communication device of any of the claims 2 to 6, wherein if the motion parameter or the direction parameter of the communication device is changed, the processing unit will adjust the role of the communication device according to the changed sensing result.

8. A communications system, comprising:
a first communication device; and
a second communication device, establishing a link with the first communication device by a touch-link technology,
wherein roles of the first communication device and the second communication device are determined according to sensing results generated by the first communication device and the second communication device.

9. A communication method, which is applied to a communication device, comprising:
Establishing (S610), by the communication device, a link by a touch-link technology;
sensing (S620) the communication device for generating a sensing result; and
determining (S630) a role of the communication device according to the sensing result.

10. The communication method of claim 9, wherein the sensing result is generated by sensing a motion parameter or a direction parameter of the communication device.

11. The communication method of claim 10, further comprising:
comparing the motion parameter of the communication device with a first threshold; and
determining the role of the communication device is a sender according to a comparison result.

12. The communications method of claim 10 or 11, further comprising:
comparing the motion parameter of the communication device with a first threshold; and
determining the role of the communication device is a receiver according to a comparison result.

13. The communications method of any of the claims 10 to 12, further comprising:
comparing the direction parameter of the communication device with a second threshold; and
determining the role of the communication device is a sender according to a comparison result.

14. The communications method of any of the claims 10 to 13, further comprising:
comparing the direction parameter of the communication device with a second threshold; and
determining the role of the communication device is a receiver according to a comparison result.

15. The communication method of any of the claims 10 to 14, further comprising:
adjusting the role of the communication device according to the changed sensing result, if the motion parameter or the direction parameter of the communication device is changed.
